(19) Europäisches Patentamt
European Patent Office
Office européen des brevets

(11) **EP 1 427 987 B1**

(12) **EUROPEAN PATENT SPECIFICATION**

(45) Date of publication and mention
of the grant of the patent:
**04.04.2012 Bulletin 2012/14**

(51) Int Cl.:
***G01C 19/56*** *(2012.01)*

(21) Application number: **02755327.0**

(22) Date of filing: **06.09.2002**

(86) International application number:
**PCT/GB2002/004056**

(87) International publication number:
**WO 2003/025503 (27.03.2003 Gazette 2003/13)**

(54) **VIBRATORY GYROSCOPIC RATE SENSOR**

VIBRATIONSKREISELSENSOR

CAPTEUR DE VITESSE GYROSCOPIQUE VIBRANT

(84) Designated Contracting States:
**AT BE BG CH CY CZ DE DK EE ES FI FR GB GR IE IT LI LU MC NL PT SE SK TR**

(30) Priority: **14.09.2001 GB 0122256**

(43) Date of publication of application:
**16.06.2004 Bulletin 2004/25**

(73) Proprietor: **Atlantic Inertial Systems Limited Southway Plymouth, PL6 6DE (GB)**

(72) Inventors:
• **FELL, Christopher Paul**
**Southway**
**Plymouth, Devon PL6 6DE (GB)**
• **ELEY, Rebecka**
**Southway**
**Plymouth, Devon PL6 6DE (GB)**
• **FOX, Colin Henry John**
**University Park**
**Nottingham NG7 2RD (GB)**
• **McWILLIAM, Stewart**
**University Park**
**Nottingham NG7 2RD (GB)**

(74) Representative: **Wojcik, Lucy Eleanor et al**
**c/o Impetus IP Limited**
**Suite 57a**
**Basepoint Business Park**
**Caxton Close, Andover**
**Hampshire SP10 3FG (GB)**

(56) References cited:
**EP-A- 0 836 073      WO-A-99/47890**
**US-B1- 6 282 958**

**Description**

This invention relates to rate sensors for sensing applied rate about two axes.

The use of ring shaped resonators in two axis Coriolis rate sensors is well known. Examples of such devices and their mode of operation are described in GB 2335273 and GB 2318184.

The devices described in GB 2335273 (WO-A-9947890) make use of a single out of plane $\cos N_c\theta$ vibration mode (where $N_c$ is the mode order) in combination with a degenerate pair of in plane $\sin (N_c\pm 1)\,\theta/\cos (N_c\pm 1)\,\theta$ vibrations modes. The out of plane $\cos N_c\theta$ mode acts as the primary carrier mode which is typically maintained at a fixed vibration amplitude. Under rotation around the appropriate axes, Coriolis forces are induced which couple energy into the in plane $\sin (N_c\pm 1)\,\theta/\cos (N_c\pm 1)\,\theta$ modes. The amplitude of the induced in plane response mode motion is directly proportional to the applied rotation rate.

The two axis rate sensor designs described in GB 2318184 (EP-A-0836073) make use of a single in plane $\cos N_c\theta$ vibration mode in combination with a degenerate pair of out of plane $\sin (N_c\pm 1)\,\theta/\cos (N_c\pm 1)\,\theta$ vibration modes. The in plane $\cos N_c\theta$ mode acts as the primary carrier mode which is typically maintained at a fixed vibration amplitude. Under rotation around the appropriate axes, Coriolis forces are induced which couple energy into the out of plane $\sin (N_c\pm 1)\,\theta\,/\cos (N_c\pm 1)\,\theta$ modes. The amplitude of the induced out of plane response mode motion is directly proportional to the applied rotation rate.

A further two axis rate sensor design is shown in WO-A-0155675 which is intended to be operated with a $\sin 3\theta/\cos 3\theta$ vibration mode pair providing degenerate carrier and response parameters.

In all of the example devices the carrier and the two response mode frequencies are required to be nominally identical. With these frequencies accurately matched the amplitude of the response mode vibration is amplfied by the mechanical quality factor, Q, of the structure. This inevitably makes the construction tolerances more stringent. In practice, it may be necessary to fine-tune the balance of the vibrating structure or resonator by adding or removing material at appropriate points. This adjusts the stiffness of mass parameters for the modes and thus differentially shifts the mode frequencies. Where these frequencies are not matched the Q amplification does not occur and the pick-offs must be made sufficiently sensitive to provide adequate gyroscope performance. For a perfect unsupported ring structure fabricated from radically isotropic material, any given pair of in or out of plane $\sin N\theta/\cos N\theta$ modes will have identical frequencies for any value of N. This degeneracy may be perturbed due to the requirement for the leg structures which support the ring. These have the effect of point spring masses acting at the point of attachment to the ring which will alter the modal mass and stiffness. In the designs described above, the number and spacing of the support legs is such that the symmetry of the response mode pair is maintained. The stated condition to achieve this requirement is that the number of legs, L, is given by:

$$L = 4 \times N_R$$

Where $N_R$ is the response mode order. These legs are set at an angular separation of $90°/N_R$. The resonator dimensions are set in order to match the carrier mode frequency to that of the response mode pair. Matching of the frequency of the second complementary mode of the carrier mode pair is not required.

Inducing a deliberate, large frequency split between the $\cos N_c\theta$ carrier mode and its complementary $\sin N_c\theta$ mode is desirable in that it prevents any undesirable interaction between these modes and fixes the orientation of the carrier mode on the ring. Fixing the mode orientation enables the carrier mode drive and pick-off to be precisely aligned in their optimum angular location to excite and detect the carrier mode vibration. GB-A-2335273 and GB-A-2318184 do not provide any teaching on how to achieve a large frequency split with known fixed mode orientations for the $\cos N_c\theta$ carrier mode and its complementary $\sin N_c\theta$ mode.

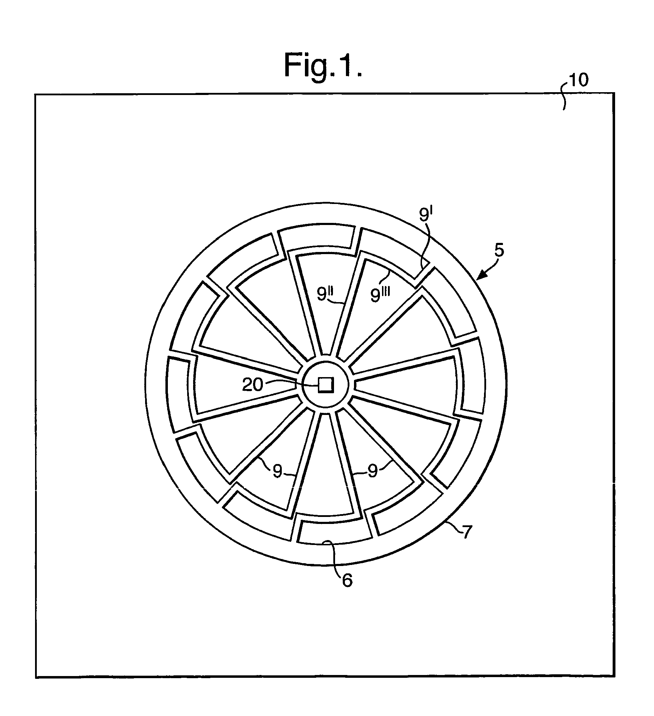

This requirement for the number of legs indicates that, for a $\sin 2\theta/\cos 2\theta$ mode pair, eight support legs will be needed, twelve for a $\sin 3\theta/\cos 3\theta$ mode pair, sixteen for a $\sin 4\theta/\cos 4\theta$ mode pair etc. These leg structures are required to suspend the ring but must allow it to vibrate in an essentially undamped oscillation in response to applied drive forces and Coriolis forces induced as a result of rotation of the structure. A leg design suitable for suspending dual axis rate sensors using planar ring structures in shown in Figure 1. This design has twelve legs and would be an appropriate arrangement for use with sensors using $\sin 3\theta/\cos 3\theta$ mode pairs according to the prior art (number of legs = $4 \times N_R$, where $N_R$=3). These support legs have a linear part 9' attached to the inner circumference of the ring 5 extending radially towards a central boss 20, a second linear part 9" extending from the central boss 20 and radially displaced from the first part. The first and second part are connected by an arcuate section 9''' concentric with the ring 5. The three parts will be integrally formed. It will be understood by those skilled in the art that other leg designs can be employed (e.g. S shaped or C shaped structures) which provide the same function in supporting the ring structure. Additionally these legs may be attached either internally or externally to the ring structure.

For devices such as these, the radial and tangential stiffness of the legs should be significantly lower than that of the ring itself so that the modal vibration is dominated by the ring structure. The radial stiffness is largely determined by the length of the arcuate segment 9''' of the leg. The straight segments 9' and 9'' of the leg dominate the tangential stiffness. The overall length of the leg structure largely determines the out of plane stiffness. Maintaining the ring to leg compliance ratio, particularly for the radial stiffness, for this design of leg becomes increasingly difficult as the arc angle of the leg structure is restricted by the proximity of the adjacent legs. This requirement places onerous restrictions on the mechanical design of the support legs and necessitates the use of leg structures which are thin (in the plane of the ring) in comparison to the ring rim. This reduced dimension renders these structures more susceptible to the effects of dimensional tolerancing in the production processes of the mechanical structure. This will result in variation in the mass and stiffness of these supporting leg elements which will disturb the symmetry of the mode dynamics and hence induce frequency splitting of the response modes.

The structures described in the prior art may be fabricated in a variety of materials using a number of processes. Where such devices are fabricated from metal these may be conveniently machined to high precision using wire erosion techniques to achieve the accurate dimensional tolerancing required. This process involves sequentially machining away material around the edges of each leg and the ring structure. The machining time, and hence production cost, increases in proportion to the number of legs. The number of legs hitherto thought to be required increases rapidly with mode order. Minimising the number of legs is therefore highly desirable, particularly for designs employing higher order modes. Similar considerations apply to structures fabricated from other materials using alternative processes.

It would be desirable to be able to design planar ring structures for use in two-axis rate sensor devices which provide a large fixed frequency split between the $\cos N_c\theta$ carrier mode and its complementary $\sin N_c\theta$ mode thus fixing its orientation on the ring structure. This should be achieved whilst maintaining the dynamic symmetry of the $\sin (N_c\pm 1)\theta /\cos (N_c\pm 1)\theta$ response mode pair such that their frequencies are matched. It would be advantageous to use a reduced number of support leg structures.

According to a first aspect of the present invention, there is provided a two axis gyroscope including a substantially planar vibrator resonator having a substantially ring or hoop-like structure with inner and outer peripheries extending around a common axis, carrier mode drive means for causing the resonator to vibrate in a $\cos N\theta$ vibration mode, carrier mode pick-off means for sensing movement of the resonator in response to said carrier mode drive means, x-axis response mode pick-off means for detecting movement of the resonator in response to rotation about the x-axis, x-axis response mode drive means for nulling said motion, y-axis response mode pick-off means for detecting movement of the resonator in response to rotation about the y-axis, y-axis response mode drive means for nulling said motion, and support means for flexibly supporting the resonator and for allowing the resonator to vibrate relative to the support means in response to the drive means and to applied rotation, characterised in that the support means comprises only L legs, where, when L is even:

$$L = 2N_c/K.$$

and
where, when L is odd:

$$L = N_c/K,$$

where K is an integer and L>2 and N is the carrier mode order, thereby to fix the carrier mode orientation on the ring or hoop-like structure, and wherein L<4 x $N_R$, where $N_R$ is the response mode order.

By selecting a value of L according to these formulae, a desired large fixed frequency split may be provided between the $\cos N_c\theta$ carrier mode and its complementary $\sin N_c\theta$ mode thus fixing its orientation on the ring structure. This may be achieved whilst maintaining the dynamic symmetry of the $\sin (N_c\pm 1)\theta /\cos (N_c\pm 1)\theta$ response mode pair such that their frequencies are matched. The number of support leg structures may also be reduced.

Each leg may comprise first and second linear portions extending from opposite ends of an arcuate portion.

In the embodiment, the legs are substantially equi-angularly spaced.

Conveniently, the support means includes a base having a projecting boss, with the inner periphery of the substantially ring or hoop-like structure to the projecting boss so that the ring or hoop-like structure is spaced from the base.

In the embodiment, the total stiffness of the legs is less than that of the ring or hoop-like structure.

The formulae defined above have been obtained as a result of a detailed analysis of the dynamics of the ring or hoop-like structure including the effects of leg motion. The present invention may provide increased design flexibility allowing greater leg compliance (relative to the ring) whilst employing increased leg dimensions (in the plane of the ring). Such designs may exhibit reduced sensitivity to dimensional tolerancing effects and allow more economical fabrication.

For a better understanding of the present invention, and to show how the same may be carried into effect, reference will now be made, by way of example, to the accompanying drawings, in which:

Figure 1 is a plan view of a vibrating structure gyroscope not according to the invention, having twelve support legs;

Figure 2 shows in plan view a two axis rate sensor according to the present invention;

Figure 3 is an edge view of a detail of the embodiment of Figure 2,

Figure 4 is a plan view of a vibrating structure (resonator) having four support legs according to the present invention;

Figure 5A shows diagrammatically an in plane cos2θ mode vibration in a symmetric resonator or vibrating structure acting as a carrier mode:

Figure 5B is a diagrammatic illustration of an in plane sin2θ mode acting as a response mode;

Figures 6A and 6B show diagrammatically the alignment of the out of plane cos2θ/sin2θ modes;

Figure 7 is a plan view of a vibrating structure having three support legs according to the present invention.

Figure 8 is a plan view of a vibrating structure having six support legs; according to the present invention.

Figures 9A and 9B show in plane cos3θ/sin3θ modes

Figures 10A and 10B show diagrammatically alignment of the out of plane sin3θ/cos3θ modes;

Figure 11 is a plan view of a vibrating structure having four support legs according the present invention.

Figure 12 is a plan view of a vibrating structure having eight support legs according the present invention.

Figures 13A and 13B show diagrammatically in plane cos4θ/sin4θ modes; and

Figures 14A and 14B show diagrammatically out of plane cos4θ/sin4θ modes.

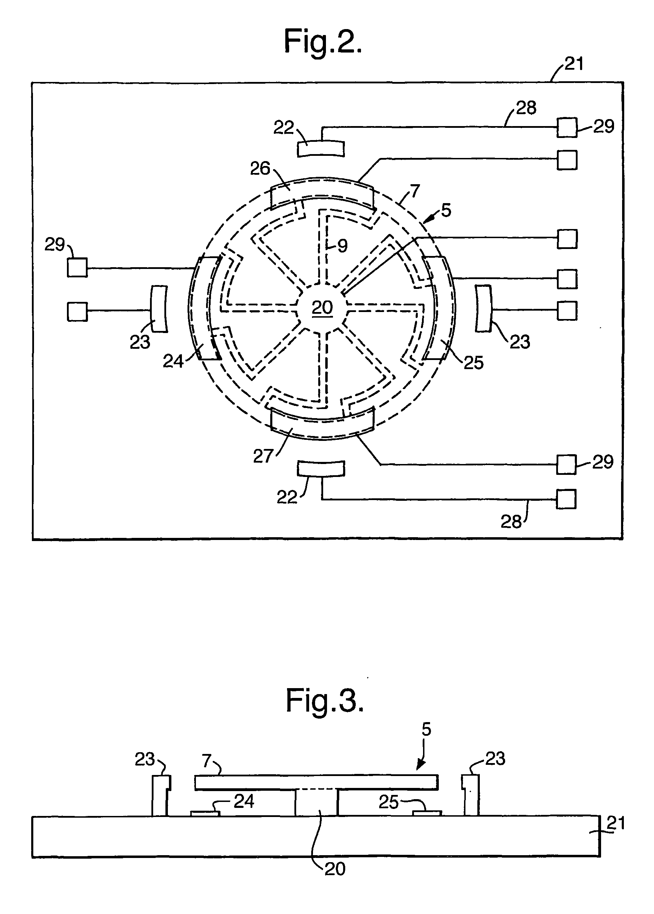

Figure 2 shows in plan a sensor for sensing applied rate on two axes. This sensor is described by way of example only, and it should be understood that other arrangements could be used in accordance with the present invention.

The vibrating structure 5 has a substantially planar substantially ring-like shape having an outer rim 7, legs 9 and a central hub or boss 20 as previously described. The structure 5 is located via the boss 20 on an insulating substrate layer 10 which may be made of glass or silicon with an insulating oxide surface layer. The vibrating structure 5 is maintained at a fixed voltage with respect to all the conductors which act as the drive and pick-off elements.

In Figure 2 means for vibrating the silicon vibrating structure 5 in a cos2θ carrier mode includes two electrostatic carrier drive elements 22 and two electrostatic carrier mode pick-off elements 23 arranged with the drive elements 22 at 0° and 180° and the pick-off elements 23 at 90° and 270° respectively with respect to the outer rim 7 of the vibrating structure 5 and located radially externally of the outer rim 7 adjacent the points of maximum radial motion of the rim 7 when vibrating in the cos2θ mode. These carrier mode drive elements 22 are used to set the vibrating structure 5 into oscillation. The carrier mode pick-off elements 23 which are located at the carrier mode anti-nodal points, sense the radial motion of the vibrating structure 5.

The drive elements may be electromagnetic, electrostatic, piezo, thermal or optical in actuation and the vibrating structure 5 motion may be detected using electrostatic, electromagnetic, piezor or optical techniques.

The means for detecting the rocking mode vibration includes an x axis electrostatic drive element 24, an x axis electrostatic pick-off element 25 located adjacent the outer rim 7 in superimposed relationship therewith at a perpendicular spacing therefrom with the y axis drive element 26, the x axis pick-off element 25, the y axis pick-off element 27 and the x axis drive element 24 being arranged at 0° 90°, 180° and 270° respectively around the outer rim 7.

The rocking motion of the x axis rate response mode is detected at the pick-off element 25 located on the surface of the support substrate under the rim 7. This motion is nulled using the x axis drive element 24 similarly located under the opposite side of the rim 7. The y axis rate response motion is similarly detected by pick-off element 27 and nulled by drive element 26. The various drive and pick-off conductive sites are connected, via tracking 28 laid onto the substrate layer surface 21, to bond pads 29. The drive and pick-off circuitry is then connected to these bond pads. A cross-section of the sensor of Figure 2 is shown in Figure 3. This shows the topography of the in plane and surface conductors more clearly.

A detailed analysis of the dynamics of the ring including the effects of the leg motion has enabled simple formulae to be developed which prescribe the range of options available in terms of the number of substantially evenly spaced support legs required to maintain frequency matching of the desired vibration mode pairs.

The analysis indicates that the requirement on the number of legs is far less restrictive than previously indicated. Simple formulae have been derived indicating which modes will have their frequency split for a given number of evenly spaced support legs. These formulae are applicable to both in plane and out of plane modes and are valid for L>< 2. If L≤2 then all modes will be split. For an even number of legs, L, frequency splitting for a mode of order N will only occur when the following condition is met:

$$N = \frac{LK}{2}.$$

where K is an integer. Maximum frequency splitting occurs when K=1 and reduces as K is increased. If the number of legs, L, is odd then frequency splitting will only occur where:

$$N = LK$$

The maximum splitting again occurs for K=1 and decreases as the value of K increases.

The practical implication of these formulae is that the criteria for maintaining frequency matching for any in plane or out of plane $\sin N\theta / \cos N\theta$ mode pair are considerably less restrictive than previously realised. These formulae also allow arrangements of support leg structures to be devised which achieve the required frequency splitting of the $\cos N_c\theta$ carrier mode and its complementary $\sin N_c\theta$ mode whilst maintaining the frequency matching of the $\sin (N_c\pm 1) \theta / \cos (N_c\pm 1) \theta$ response mode pair.

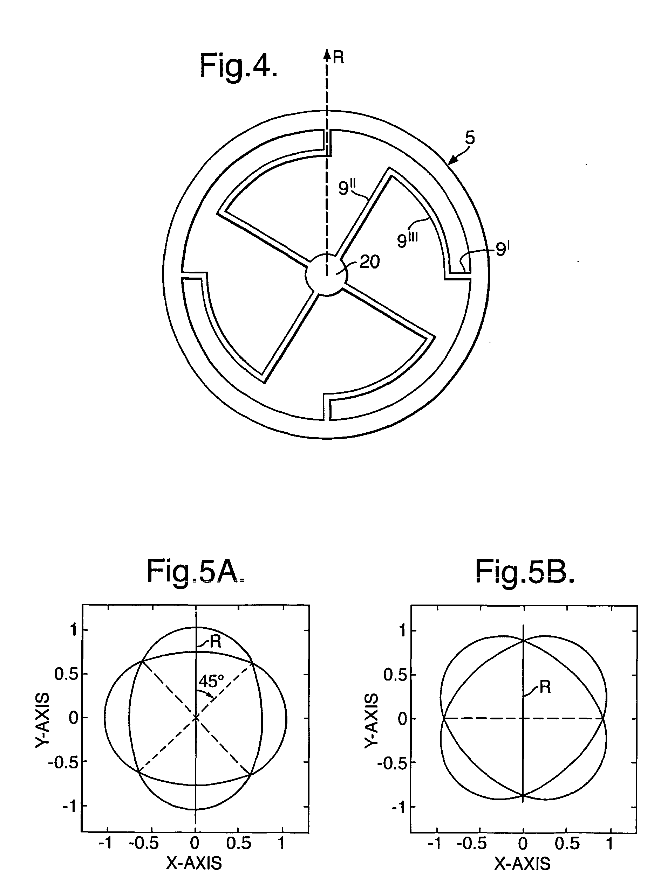

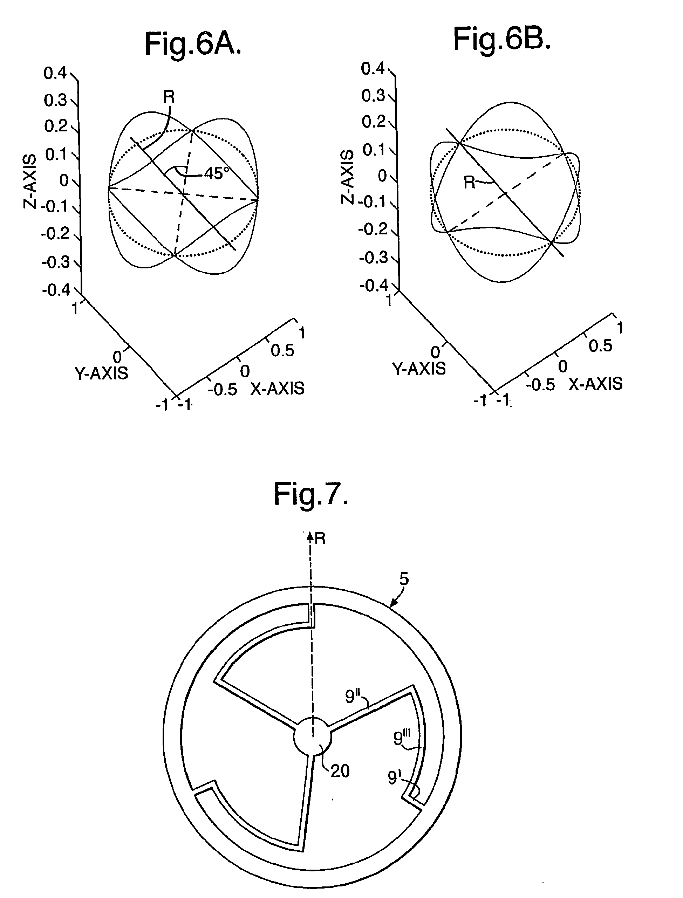

For device designs employing a $\cos 2\theta$ in plane or out of plane carrier mode the required mode splitting may be achieved using four support legs at 90° separation as shown in Figure 4. The formulae confirm that the use of four support legs does not split the frequencies of either the $\sin\theta / \cos\theta$ ($N_c-1=1$) mode pair or the $\sin 3\theta / \cos 3\theta$ ($N_c+1=3$) mode pair. Two axis rate sensors may be designed using either of these mode pairs as response modes. When using an in plane carrier mode, the points of attachment of the legs to the ring will align directly with the radial anti-nodes of one mode and will coincide with the radial nodes of the complementary mode. The resulting alignment of the in-plane $\sin 2\theta / \cos 2\theta$ modes with respect to the resonator structure are shown in Figures 5A and 5B where the 0° angle corresponds to the 0° reference, R, in Figure 4. When using an out of plane carrier mode, the points of attachment of the legs will coincide with anti-nodes of the out of plane motion of one mode and the nodes of the complementary mode. Figures 6A and 6B show the resulting alignment of the out of plane $\sin 2\theta / \cos 2\theta$ modes with respect to the resonator structure. The matching of the carrier mode frequency with the desired $\sin (N_c\pm 1) \theta / \cos (N_c\pm 1) \theta$ response mode frequencies is typically achieved by adjusting the depth (z-axis dimension) of the ring. This shifts the frequencies of the out of plane modes but leaves the in plane mode frequencies substantially constant.

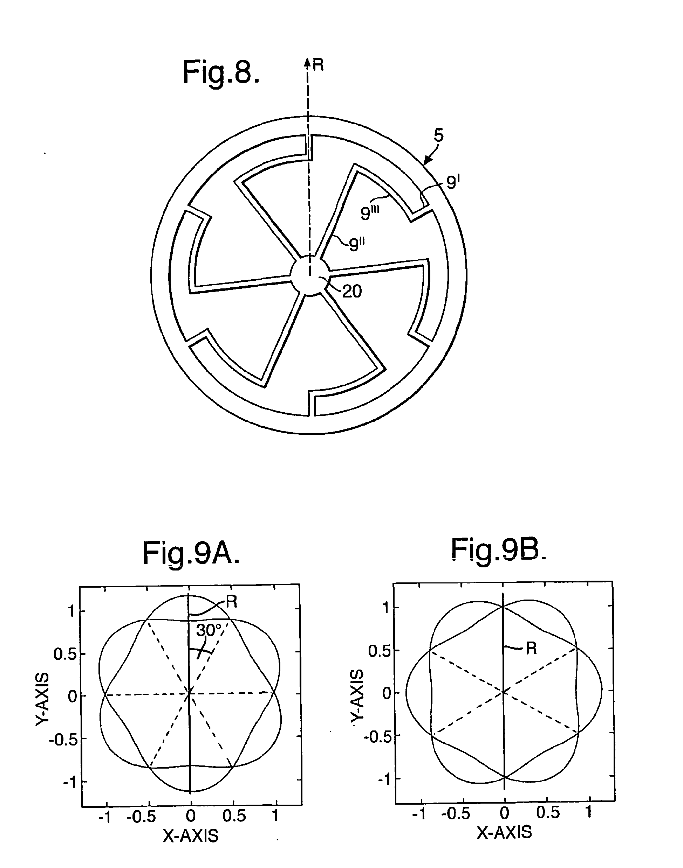

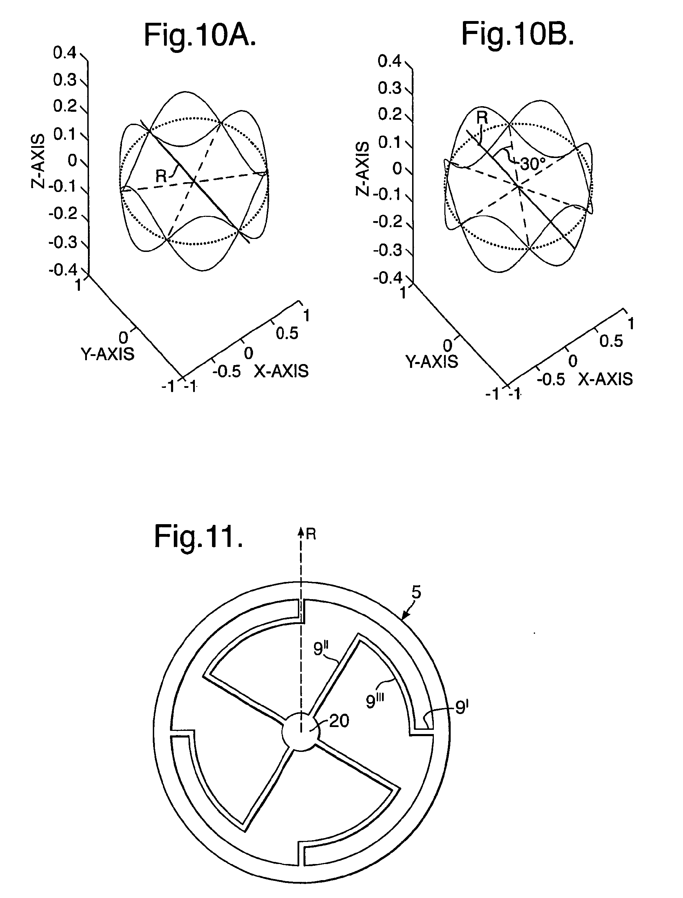

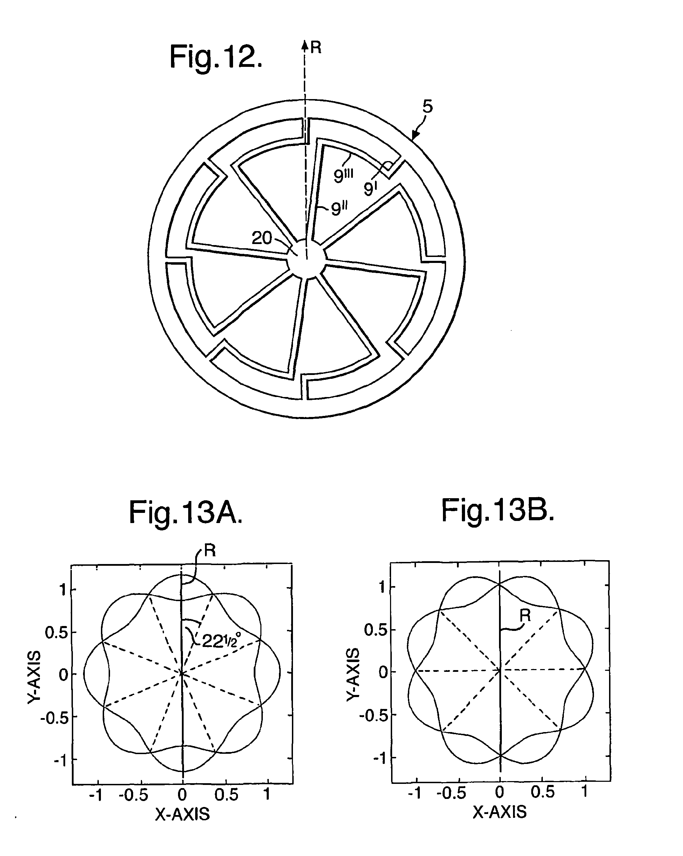

For device designs employing a $\cos 3\theta$ in plane or out of plane carrier mode the required mode splitting may be achieved using three support legs with 120° separation or with six support legs at 60° separation as show in Figures 7 and 8 respectively. The formulae confirm that the use of three or six support legs does not split the frequencies of either the $\sin 2\theta / \cos 2\theta$ ($N_c-1=2$) or the $\sin 4\theta / \cos 4\theta$ ($N_c+1 = 4$) mode pairs both of which maybe used in combination with this carrier mode. When using an in plane carrier mode, the points of attachment of the legs to the ring will align directly with the radial anti-nodes of one mode and will coincide with the radial nodes of the complementary mode. The resulting alignment of the in plane $\cos 3\theta / \sin 3\theta$ modes with respect to the resonator structure are shown in Figures 13a and 13b where the 0° reference, R, in Figures 7 and 8. When using an out of plane carrier mode, the points of attachment of the legs will coincide with anti-nodes of the complementary mode. Figures 10A and 10B show the resulting alignment for the out of plane $\sin 3\theta / \cos 3\theta$ modes with respect to the resonator structure.

For device designs employing a $\cos 4\theta$ in plane or out of plane carrier mode the required mode splitting may be achieved by four support legs at 90° separation or with eight support legs at 45° separation as shown in Figures 11 and 12. The formulae confirm that the use of 4 or 8 support legs does not split the frequencies of either the $\sin 3\theta / \cos 3\theta$ ($N_c-1=3$) or the $\sin 5\theta / \cos 5\theta$ ($N_c+1=5$) mode pairs both of which may be used in combination with this carrier mode.

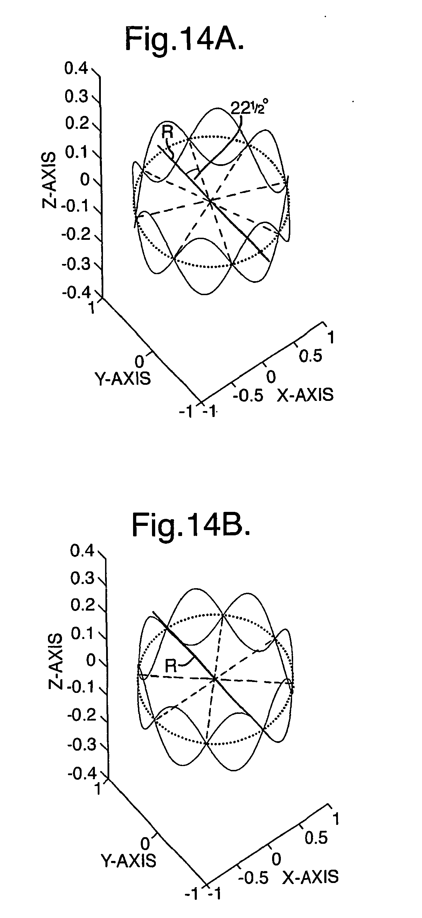

When using an in plane carrier mode, the points of attachment of the legs to the ring will align directly with the radial anti-nodes of one mode and will coincide with the radial nodes of the complementary mode. The resulting alignment of the in plane cos4θ/sin4θ modes with respect to the resonator structure are shown in Figures 14A and 14B where the 0° angle corresponds to the 0° R, reference in Figure 11 and 12. When using an out of plane carrier mode, the points of attachment of the legs will coincide with anti-nodes of the out of plane motion of one mode and the nodes of the complementary mode. Figures 14A and 14B show the resulting alignment for the out of plane cos4θ/sin4θ modes with respect to the resonator structure.

For out of plane carrier modes the drive and pick-off elements are conveniently located directly above and/or below the anti-nodes of the out of plane motion. For in plane carrier modes the drive and pick-off elements are conveniently located adjacent to the radial anti-nodes in the plane of the ring. The optimum alignment for the drive and pick-off elements is therefore achieved without the requirement for any trimming or adjustment of the mode positions. For single axis devices it is know that tolerancing affects in the fabrication process may lead to small imbalances in $\cos N_R\theta$ mode frequencies. These may be corrected, using mechanical trimming techniques such as described in GB-A-2292609 which describes a trimming procedure suitable for use with in plane $\sin N_R\theta/\cos N_R\theta$ modes. It is likely that such techniques will need to be applied to the response modes for two axis devices. Due to the large imbalance between the carrier mode and its compliment for the structures described here, the mode alignment will be unaffected by such trimming procedures.

The resonator designs shown in Figures 4,7,8,11 and 12 provide structures suitable for use in two axis rate sensors. These designs provide a carrier mode whose position is fixed with respect to the resonator structure which is isolated in frequency from its complementary mode. This is generally achieved using a number of support leg structures which is reduced from those of the prior art. This provides increased design flexibility allowing the ratio between the combined leg stiffness and the ring stiffness to be maintained at required value using increased leg dimensions (in the plane of the ring). Such designs exhibit reduced sensitivity to dimensional tolerancing effects and allow for more economical fabrication, particularly for structures machined from metals.

In all resonator designs the combined stiffness of the support legs is required to be less than that of the ring. This ensures that the modal vibration is dominated by the ring structure and helps to isolate the resonator from the effects of thermally induced stresses coupling in via the boss 20 of the structure, which will adversely affect performance. When employing fewer support legs the required leg to ring compliance ratio may be maintained by using longer support leg structures of increased width.

## Claims

1. A two axis gyroscope including a substantially planar vibratory resonator (5) having a substantially ring or hoop-like structure with inner and outer peripheries (6, 7) extending around a common axis (8), carrier mode drive means (22) for causing the resonator to vibrate in a $\cos N_c\theta$ vibration mode, carrier mode pick-off means (23) for sensing movement of the resonator in response to said carrier mode drive means, X-axis response mode pick-off means (25) for detecting movement of the resonator in response to rotation about the X-axis, X-axis response mode drive means (24) for nulling said motion, y-axis response mode pick-off means (27) for detecting movement of the resonator (5) in response to rotation about the y-axis, y-axis response mode drive means (26) for nulling said motion, and support means (9) for flexibly supporting the resonator (5) and for allowing the resonator (5) to vibrate relative to the support means (9) in response to the drive means (22) and to applied rotation, **characterised in that** the support means (9) comprises 4 legs, the carrier mode order Nc is 2 and the out of plane response mode order NR is 3, thereby fixing the carrier mode orientation on the ring or hoop-like structure.

2. A two axis gyroscope including a substantially planar vibratory resonator (5) having a substantially ring or hoop-like structure with inner and outer peripheries (6, 7) extending around a common axis (8), carrier mode drive means (22) for causing the resonator to vibrate in a $\cos N_c\theta$ vibration mode, carrier mode pick-off means (23) for sensing movement of the resonator in response to said carrier mode drive means, X-axis response mode pick-off means (25) for detecting movement of the resonator in response to rotation about the X-axis, X-axis response mode drive means (24) for nulling said motion, y-axis response mode pick-off means (27) for detecting movement of the resonator (5) in response to rotation about the y-axis, y-axis response mode drive means (26) for nulling said motion, and support means (9) for flexibly supporting the resonator (5) and for allowing the resonator (5) to vibrate relative to the support means (9) in response to the drive means (22) and to applied rotation, **characterised in that** the support means (9) comprises 3 or 6 legs, the in plane carrier mode order $N_c$ is 3 and the out of plane response mode order NR is 2 or 4, thereby fixing the carrier mode orientation on the ring or hoop-like structure.

3. A rate sensor according to Claim 1 or 2, wherein each leg (9) comprises first and second linear portions ($9^1$, $9^{11}$)

extending from opposite ends of an arcuate portion ($9^{111}$).

4. A rate sensor according to any one of the preceding claims, wherein the legs are substantially equi-angularly spaced.

5. A rate sensor according to any one of the preceding claims, wherein the support means includes a base having a projecting boss (20), with the inner periphery (6) of the substantially ring or hoop-like structure being coupled to the boss (20) by the legs (9) which extend from said inner periphery (6) of the ring or hoop like structure to the projecting boss (20) so that the ring or hoop-like shape structure is spaced from the base.

6. A rate sensor according to any one of the preceding claims, wherein the total stiffness of the legs is less that that of the ring or hoop-like shape structure.

**Patentansprüche**

1. Zweiachsiger Kreisel, der umfasst: einen im Wesentlichen ebenen Vibrationsresonator (5) mit einer im Wesentlichen ring- oder reifenartigen Struktur mit einem inneren und äußeren Umfang (6, 7), der sich um eine gemeinsame Achse (8) erstreckt; eine Trägermodusantriebseinrichtung (22) dafür, dass bewirkt wird, dass der Resonator in einer $\cos N_C\theta$-Schwingungsart schwingt; eine Trägermodusabgriffeinrichtung (23) für das Messen der Bewegung des Resonators als Reaktion auf die Trägermodusantriebseinrichtung; eine X-Achsen-Ansprechmodusabgriffeinrichtung (25) für das Nachweisen einer Bewegung des Resonators als Reaktion auf eine Drehung um die X-Achse; eine X-Achsen-Ansprechmodusantriebseinrichtung (24) für das Nullen der Bewegung; eine y-Achsen-Ansprechmodusabgriffeinrichtung (27) für das Nachweisen der Bewegung des Resonators (5) als Reaktion auf eine Drehung um die y-Achse; eine y-Achsen-Ansprechmodusantriebseinrichtung (26) für das Nullen der Bewegung; und eine Haltevorrichtung (9) für das flexible Halten des Resonators (5) und dafür, dass gestattet wird, dass der Resonator (5) als Reaktion auf die Antriebseinrichtung (22) und die angewandte Drehung relativ zur Haltevorrichtung (9) schwingt, **dadurch gekennzeichnet, dass** die Haltevorrichtung (9) 4 Schenkel aufweist, wobei die Trägermodusordnung Nc 2 beträgt und die Trägermodusordnung NR außerhalb der Ebene 3 beträgt, wodurch die Trägermodusausrichtung auf die ring- oder reifenartige Struktur fixiert wird.

2. Zweiachsiger Kreisel, der umfasst: einen im Wesentlichen ebenen Vibrationsresonator (5) mit einer im Wesentlichen ring- oder reifenartigen Struktur mit einem inneren und äußeren Umfang (6, 7), der sich um eine gemeinsame Achse (8) erstreckt; eine Trägermodusantriebseinrichtung (22) dafür, dass bewirkt wird, dass der Resonator in einer $\cos N_C\theta$-Schwingungsart schwingt; eine Trägermodusabgriffeinrichtung (23) für das Messen der Bewegung des Resonators als Reaktion auf die Trägermodusantriebseinrichtung; eine X-Achsen-Ansprechmodusabgriffeinrichtung (25) für das Nachweisen einer Bewegung des Resonators als Reaktion auf eine Drehung um die X-Achse; eine X-Achsen-Ansprechmodusantriebseinrichtung (24) für das Nullen der Bewegung; eine y-Achsen-Ansprechmodusabgriffeinrichtung (27) für das Nachweisen der Bewegung des Resonators (5) als Reaktion auf eine Drehung um die y-Achse; eine y-Achsen-Ansprechmodusantriebseinrichtung (26) für das Nullen der Bewegung; und eine Haltevorrichtung (9) für das flexible Halten des Resonators (5) und dafür, dass gestattet wird, dass der Resonator (5) als Reaktion auf die Antriebseinrichtung (22) und die angewandte Drehung relativ zur Haltevorrichtung (9) schwingt, **dadurch gekennzeichnet, dass** die Haltevorrichtung (9) 3 oder 6 Schenkel aufweist, wobei die Trägermodusordnung Nc in der Ebene 3 beträgt und die Trägermodusordnung NR außerhalb der Ebene 2 oder 4 beträgt, wodurch die Trägermodusausrichtung auf die ring- oder reifenartige Struktur fixiert wird.

3. Geschwindigkeitssensor nach Anspruch 1 oder 2, bei dem ein jeder Schenkel (9) einen ersten und zweiten linearen Abschnitt ($9^1$, $9^{11}$) aufweist, die sich von entgegengesetzten Enden eines bogenförmigen Abschnittes ($9^{111}$) erstrecken.

4. Geschwindigkeitssensor nach einem der vorhergehenden Ansprüche, bei dem die Schenkel im Wesentlichen gleichwinklig beabstandet sind.

5. Geschwindigkeitssensor nach einem der vorhergehenden Ansprüche, bei dem die Haltevorrichtung eine Basis mit einer vorstehenden Nabe (20) aufweist, wobei der innere Umfang (6) der im Wesentlichen ring- oder reifenartigen Struktur mit der Nabe (20) mittels der Schenkel (9) verbunden ist, die sich vom inneren Umfang (6) der ring- oder reifenartigen Struktur zur vorstehenden Nabe (20) erstrecken, so dass die ring- oder reifenartige Struktur von der Basis beabstandet ist.

**6.** Geschwindigkeitssensor nach einem der vorhergehenden Ansprüche, bei dem die Gesamtsteifigkeit der Schenkel geringer ist als die der ring- oder reifenartigen Struktur.

**Revendications**

**1.** Gyroscope à deux axes, englobant un résonateur vibratoire pratiquement plan (5), comportant une structure de forme pratiquement annulaire ou circulaire, avec des périphéries interne et externe (6, 7) s'étendant autour d'un axe commun (8), un moyen d'entraînement de mode porteur (22) pour entraîner la vibration du résonateur dans un mode de vibration $\cos N_C\theta$, un moyen de détection du mode porteur (23) pour détecter le mouvement du résonateur en réponse audit moyen d'entraînement de mode porteur, un moyen de détection du mode de réponse de l'axe X (25) pour détecter le mouvement du résonateur en réponse à la rotation autour de l'axe X, un moyen d'entraînement du mode de réponse de l'axe X (24) pour annuler ledit mouvement, un moyen de détection du mode de réponse de l'axe y (27) pour détecter le mouvement du résonateur (5) en réponse à la rotation autour de l'axe y, un moyen d'entraînement du mode de réponse de l'axe y (26) pour annuler ledit mouvement, et un moyen de support (9) pour supporter de manière flexible le résonateur (5) et pour permettre la vibration du résonateur (5) par rapport au moyen de support (9) en réponse au moyen d'entraînement (22) et à la rotation appliquée, **caractérisé en ce que** le moyen de support (9) comprend 4 branches, l'ordre du mode porteur Nc correspondant à 2 et l'ordre du mode de réponse hors du plan NR correspondant à 3, fixant ainsi l'orientation du mode porteur sur la structure annulaire ou circulaire.

**2.** Gyroscope à deux axes, englobant un résonateur vibratoire pratiquement plan (5), comportant une structure de forme pratiquement annulaire ou circulaire, avec des périphéries interne et externe (6, 7) s'étendant autour d'un axe commun (8), un moyen d'entraînement de mode porteur (22) pour entraîner la vibration du résonateur dans le mode de vibration $\cos N_C\theta$, un moyen de détection du mode porteur (23) pour détecter le mouvement du résonateur en réponse audit moyen d'entraînement de mode porteur, un moyen de détection du mode de réponse de l'axe X (25) pour détecter le mouvement du résonateur en réponse à la rotation autour de l'axe X, un moyen d'entraînement de mode de réponse de l'axe X (24) pour annuler ledit mouvement, un moyen de détection du mode de réponse de l'axe y (27) pour détecter le mouvement du résonateur (5) en réponse à la rotation autour de l'axe y, un moyen d'entraînement du mode de réponse de l'axe y (26) pour annuler ledit mouvement, et un moyen de support (9) pour supporter de manière flexible le résonateur (5) et pour permettre la vibration du résonateur (5) par rapport au moyen de support (9) en réponse au moyen d'entraînement (22) et à la rotation appliquée, **caractérisé en ce que** le moyen de support (9) comprend 3 ou 6 branches, l'ordre du mode porteur dans le plan Nc correspondant à 3 et l'ordre du mode de réponse hors du plan NR correspondant à 2 ou 4, fixant ainsi l'orientation du mode porteur sur la structure de forme annulaire ou circulaire.

**3.** Capteur de vitesse selon les revendications 1 ou 2, dans lequel chaque branche (9) comprend des première et deuxième parties linéaires ($9^1$, $9^{11}$) s'étendant à partir des extrémités opposées d'une partie arquée ($9^{111}$).

**4.** Capteur de vitesse selon l'une quelconque des revendications précédentes, dans lequel les branches sont espacées pratiquement à angles égaux.

**5.** Capteur de vitesse selon l'une quelconque des revendications précédentes, dans lequel le moyen de support englobe une base, comportant un bossage en saillie (20), la périphérie interne (6) de la structure de forme pratiquement annulaire ou circulaire étant accouplée au bossage (20) par les branches (9) s'étendant de ladite périphérie interne (6) de la structure de forme annulaire ou circulaire vers le bossage en saillie (20), de sorte que la structure de forme annulaire ou circulaire est espacée de la base

**6.** Capteur de vitesse selon l'une quelconque des revendications précédentes, dans lequel la rigidité totale des branches est inférieure à celle de la structure de forme annulaire ou circulaire.

## Fig.1.

# Fig.2.

# Fig.3.

# Fig.4.

# Fig.5A.

# Fig.5B.

# Fig.6A.

# Fig.6B.

# Fig.7.

# Fig.8.

# Fig.9A.

# Fig.9B.

## Fig.10A.

## Fig.10B.

## Fig.11.

# Fig.12.

# Fig.13A.

# Fig.13B.

# Fig.14A.

# Fig.14B.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2335273 A
- GB 2318184 A
- WO 9947890 A
- EP 0836073 A
- WO 0155675 A
- GB 2292609 A